# EUROPÄISCHE PATENTSCHRIFT

(11) **EP 3 553 388 B1**
(45) Veröffentlichungstag und Bekanntmachung des Hinweises auf die Patenterteilung: **06.03.2024**
(21) Anmeldenummer: 19164920.1
(22) Anmeldetag: 25.03.2019
(51) Int. Cl.: F24C 15/20, F24C 7/08

(54) **DUNSTABZUGSVORRICHTUNG MIT ABBILDENDEM FLÄCHENELEMENT FÜR DIGITALE INHALTE UND KÜCHENANORDNUNG MIT DUNSTABZUGSVORRICHTUNG**
EXTRACTOR HOOD DEVICE WITH IMAGING AREA ELEMENT FOR DIGITAL CONTENT AND KITCHEN APPLIANCE WITH EXTRACTOR HOOD DEVICE
DISPOSITIF DE HOTTE ASPIRANTE AVEC UN ÉLÉMENT DE SURFACE À REPRODUCTION POUR CONTENUS NUMÉRIQUES ET AGENCEMENT DE CUISINE AVEC UN DISPOSITIF DE HOTTE ASPIRANTE

(30) Priorität: 12.04.2018 DE 102018205558
(43) Veröffentlichungstag der Anmeldung: 16.10.2019
(73) Patentinhaber: BSH Hausgeräte GmbH, 81739 München (DE)
(72) Erfinder: Djohar, Gabriel, 81369 München (DE); Kirschbaum, Maike, 81545 München (DE); Kleinlein, Philipp, 81371 München (DE); Schüssler, Andreas, 35043 Marburg (DE)

(56) Entgegenhaltungen:
- EP-A1- 3 115 497
- EP-A1- 3 502 571
- JP-U- S62 204 223
- US-A1- 2010 065 038
- US-B1- 6 809 295

## Beschreibung

Die vorliegende Erfindung betrifft eine Dunstabzugsvorrichtung mit abbildendem Flächenelement für digitale Inhalte sowie eine Küchenanordnung mit mindestens einer Dunstabzugsvorrichtung.

Im Zuge der Modernisierung von Küchen ist es bekannt digitale Inhalte in der Küche zu projizieren. Beispielsweise ist in der WO 2016/202524 A1 eine Vorrichtung zur Unterstützung eines Nutzers in einem Haushalt beschrieben. Die Vorrichtung wird auch als persönlicher Küchen-Assistent oder kurz als PKA bezeichnet. Die Vorrichtung umfasst eine Interaktionseinheit, die einen Projektor aufweist, der eingerichtet ist, ein Bild auf eine Projektionsfläche in dem Umfeld der Vorrichtung zu projizieren. Als Projektionsfläche wird hierbei beispielsweise eine Raumwand verwendet.

Ein Nachteil dieser bekannten Art der Abbildung von digitalen Inhalten besteht darin, dass zum einen die Oberfläche, auf die projiziert wird, wie beispielsweise eine Raumwand ,in der Regel eine unregelmäßige Oberfläche aufweist, so dass Informationen, die dort projiziert werden unterbrochen oder verzerrt sind. Zudem sind die Oberflächen, insbesondere die Raumwand hinter dem Kochfeld einer großen Menge an Verunreinigungen ausgesetzt. Insbesondere können Fettpartikel, die in Dünsten enthalten sind, die beim Kochen entstehen, zu der Raumwand gelangen. Durch die Ablagerung von Verunreinigungen wird die Qualität der projizierten Inhalte weiter verschlechtert.

In der US 2010/065 038 A1 wird eine Vorrichtung zur Ventilation von Kochgeräten beschrieben. Insbesondere wird eine verbesserte Abzugshaube beschrieben, die in eine Vielzahl von Positionen neben oder über der Kochoberfläche eines Herdes gebracht werden kann. An der Haube kann ein Spritzschutz vorgesehen sein, der durchsichtig ist und auf den ein Heads-up Display projiziert werden kann. Die Haube selber besteht aus vertikal verschiebbaren Säulen und der eigentlichen Haube, die an den distalen Enden der Säulen vorgesehen ist und deren Absaugöffnung in der Unterseite der Haube liegt. Diese Vorrichtung weist somit einen aufwändigen Aufbau auf.

In der US 6,809,295 B1 ist ein Herd mit einem Monitor beschrieben. Der Monitor wird über eine Stütze an dem Herd gehalten, die an der Rückseite des Herdes vorgesehen ist und über die der Monitor ausgefahren werden kann. Eine Dunstabzugsvorrichtung ist an dem Herd nicht vorgesehen.

In der EP 3 115 497 A1 ist ein Haushaltsgerät mit einem Anzeigegerät beschrieben. Das Anzeigegerät umfasst eine ebene Projektionsplatte und eine Projektionsquelle. Das Haushaltsgerät kann eine Dunstabzugshaube sein, die oberhalb eines Kochfeldes montiert ist.

Die JP S 62 204223 U offenbart eine Dunstabzugsvorrichtung, bei der ein Element bezüglich der Absaugöffnung verfahren werden kann.

In der EP 3 502 571 A1 ist eine Dunstabzugsvorrichtung beschrieben, bei der Schirmelemente der Dunstabzugsvorrichtung aus Glas oder Kunststoff bestehen können. Aufgabe der vorliegenden Erfindung ist es daher eine Möglichkeit zu schaffen dem Benutzer einer Küchenanordnung digitale Inhalte in einer hohen Qualität ausgeben zu können und dennoch den Aufbau der Küchenanordnung einfach halten zu können.

Die Aufgabe wird gelöst durch eine Dunstabzugsvorrichtung mit den Merkmalen des Anspruchs 1 Als Dunstabzugsvorrichtung wird hierbei eine Vorrichtung bezeichnet, die in einer Küchenanordnung integriert werden kann. Insbesondere wird als Dunstabzugsvorrichtung eine Vorrichtung bezeichnet, die in eine Arbeitsplatte eines Küchenschrankes einer Küchenanordnung eingebracht werden kann. Beispiele für die Dunstabzugsvorrichtung, sind ein sogenannter Muldenlüfter oder ein sogenannter Downdraft-Dunstabzug. Richtungsangaben, wie oben und unten beziehen sich auf eine Dunstabzugsvorrichtung in dem Zustand, in dem diese in einer sich horizontal erstreckenden Arbeitsplatte eingebracht ist. Als Vorderseite der Dunstabzugsvorrichtung wird die Seite bezeichnet, die dem Benutzer zugewandt ist. Bei einer Dunstabzugsvorrichtung, die vor einer Raumwand angeordnet ist, ist die Vorderseite daher die Seite, die der Raumwand abgewandt ist. Als Breite wird die Erstreckung in der Horizontalen bezeichnet, die parallel zu einer solchen Raumwand ist, und als Tiefe wird die Richtung in der Horizontalen bezeichnet, die sich senkrecht zu der Breite erstreckt.

Als Gehäuse der Dunstabzugsvorrichtung wird ein Gehäuse bezeichnet, in dem zumindest ein Teil des Ausfahrelementes zumindest zeitweise aufgenommen ist. Das Gehäuse kann einen Rahmen oder einen Behälter darstellen. Das Gehäuse dient vorzugsweise zur Befestigung der Dunstabzugsvorrichtung in einer Arbeitsplatte eines Küchenschrankes. Zudem ist das mindestens eine Ausfahrelement an dem Gehäuse verschiebbar gelagert. Das Ausfahrelement kann hierbei an dem Gehäuse über eine entsprechende Bewegungsvorrichtung befestigt sein. Zusätzlich kann in oder an dem Gehäuse eine Führung für das mindestens eine Ausfahrelement vorgesehen sein. Bei der erfindungsgemäßen Dunstabzugsvorrichtung können mehrere Ausfahrelemente vorgesehen sein. Die Erfindung wird aber im Folgenden weitestgehend unter Bezugnahme auf eine Dunstabzugsvorrichtung mit einem Ausfahrelement beschrieben. Die Beschreibungen gelten - soweit anwendbar - entsprechend für Ausführungsformen der Dunstabzugsvorrichtung mit mehreren Ausfahrelementen.

Das Gehäuse weist in dessen Oberseite mindestens eine Durchlassöffnung zum Auslass zumindest eines Teils des Ausfahrelementes aus dem Gehäuse auf. Bei einem Gehäuse, das einen Behälter darstellt, ist daher die Durchlassöffnung in der Oberseite des Behälters gebildet. Bei einem Gehäuse, das einen Rahmen darstellt, erstreckt sich die Durchlassöffnung durch die gesamte Höhe des Rahmens. Die Durchlassöffnung weist einen Querschnitt auf, der zumindest dem Querschnitt des Ausfahrelementes entspricht. Das Ausfahrelement steht vorzugsweise in der Vertikalen. Dabei entspricht der Querschnitt der Durchlassöffnung zumindest der Breite und Tiefe des Ausfahrelementes. Die Tiefe des Ausfahrelementes kann auch als Dicke des Ausfahrelementes bezeichnet werden. Zumindest ein Teil des Ausfahrelementes kann somit durch die Durchlassöffnung aus dem Gehäuse nach oben herausgeschoben werden.

Das mindestens eine Ausfahrelement ist an dem Gehäuse zwischen einer Ruhestellung und einer Betriebsstellung vertikal verschiebbar gelagert. In der Ruhestellung liegt das Ausfahrelement in oder unterhalb der Durchlassöffnung des Gehäuses und in der Betriebsstellung zumindest bereichsweise oberhalb der Durchlassöffnung. Die Durchlassöffnung liegt vorzugsweise in der Ebene der Arbeitsplatte einer Küchenanordnung, wie beispielsweise eines Küchenunterschrankes. Als Ruhestellung wird daher die Stellung des Ausfahrelementes bezeichnet, in dem dieses sich zumindest bereichsweise und vorzugsweise vollständig unterhalb der Arbeitsplatte befindet. Als Betriebsstellung wird die Stellung des Ausfahrelementes bezeichnet, bei dem dieses zumindest bereichsweise oberhalb der Arbeitsplatte liegt. Insbesondere der Teil des Ausfahrelementes, in dem das abbildende Flächenelement vorgesehen ist, liegt in der Betriebsstellung oberhalb des Durchlasses des Gehäuses und damit oberhalb der Arbeitsplatte.

Als Ausfahrelement wird ein Bauteil verstanden, das eine flächige Erstreckung aufweist. In der einfachsten Form kann das Ausfahrelement eine Scheibe oder Platte darstellen und auch als Plattenelement bezeichnet werden. Das Ausfahrelement kann eben ausgestaltet sein oder eine Krümmung aufweisen. Das Ausfahrelement kann einteilig oder mehrteilig sein. Insbesondere können mehrere flächige Komponenten, wie Platten, Scheiben und/oder Filme das Ausfahrelement bilden. Allerdings kann das Ausfahrelement auch ein Körper, insbesondere ein Korpus, in dem zumindest ein Luftführungskanal vorgesehen ist, sein.

Zumindest bereichsweise weist das Ausfahrelement ein abbildendes Flächenelement für digitale Inhalte auf. Das abbildende Flächenelement kann ein Bereich einer Oberfläche des Ausfahrelementes sein. Es liegt allerdings auch im Rahmen der Erfindung, dass die gesamte Oberfläche des Ausfahrelementes an einer Seite des Ausfahrelementes das abbildende Flächenelement darstellt. Besteht das Ausfahrelement aus mehreren Komponenten, kann zumindest ein Teil einer dieser Komponenten das abbildende Flächenelement bilden.

Als abbildendes Flächenelement wird eine Fläche bezeichnet, an der eine Wiedergabe eines digitalen Inhaltes erzeugt oder von dem die Wiedergabe abgegeben werden kann.

Als abbildendes Flächenelement wird daher eine Projektionsfläche, auf die ein Bild oder ein anderer digitalen Inhalt von einem Projektor projiziert wird und dort für den Benutzer der Dunstabzugsvorrichtung sichtbar ist, bezeichnet. Eine solche Projektionsfläche kann auch als Leinwand bezeichnet werden. Alternativ kann das abbildende Flächenelement einen Bildschirm darstellen, der Bilder oder eine andere Wiedergabe digitaler Inhalte erzeugt.

Indem erfindungsgemäß ein Ausfahrelement bereit gestellt wird, das zumindest bereichsweise ein abbildendes Flächenelement für digitale Inhalte aufweist und das zudem bezüglich eines Gehäuses verschoben werden kann, kann eine Reihe von Vorteilen erzielt werden. Zum einen kann das Ausfahrelement zumindest in der Ruhestellung in dem Gehäuse aufgenommen werden oder befindet sich zumindest unterhalb der Arbeitsplatte. Hierdurch kann das Ausfahrelement vor Verunreinigungen geschützt werden. Zudem liegt in der Betriebsstellung das abbildende Flächenelement oberhalb des Gehäuses und damit oberhalb der Arbeitsplatte, so dass das abbildende Flächenelement für den Benutzer sichtbar wird. Indem das abbildende Flächenelement an einem Ausfahrelement vorliegt, das separat zu bereits vorhandenen Oberflächen, wie einer Raumwand oder Arbeitsplatte ist, kann das Ausfahrelement zumindest in dem Bereich des abbildenden Flächenelementes mit optisch vorteilhaften Eigenschaften ausgestattet werden. Insbesondere können beispielsweise ein geeignetes Material und Oberflächeneigenschaft gewählt werden. Durch das Vorsehen eines abbildenden Flächenelementes an einem Ausfahrelement, das gegenüber dem Gehäuse und damit gegenüber der Arbeitsplatte vertikal verschoben werden kann, können zudem dem Benutzer digitale Inhalte in einer gewünschten Höhe angezeigt werden. Durch das Einfahren des Ausfahrelementes in die Ruheposition kann zudem eine Verschmutzung des Ausfahrelementes reduziert und dadurch die Qualität der darüber ausgegebenen digitalen Inhalte verbessert werden.

Erfindungsgemäß stellt das Ausfahrelement zumindest im Bereich des abbildenden Flächenelementes eine Platte aus transparentem Material dar, die an zumindest einer Oberfläche oberflächenbehandelt ist. Die Platte kann aus Kunststoff oder Glas bestehen. Besonders bevorzugt wird das gesamte Ausfahrelement aus einer Platte gebildet und die Oberflächenbehandlung erfolgt in dem Bereich, der das abbildende Flächenelement bildet. Das abbildende Flächenelement kann eine Teilfläche der Oberfläche der Platte sein oder die gesamte Oberfläche der Platte bedecken. Die Oberfläche, die zumindest teilweise oberflächenbehandelt ist, kann die Vorderseite oder die Rückseite der Platte sein. Dies bedeutet, dass die oberflächenbehandelte Seite der Vorderseite der Dunstabzugsvorrichtung zugewandt oder abgewandt ist. Als Oberflächenbehandlung wird eine Behandlung der Oberfläche der Platte bezeichnet, durch die die optischen Eigenschaften an dieser Oberfläche verändert werden. Insbesondere wird durch die Oberflächenbehandlung die Reflexionseigenschaft der Oberfläche der Platte eingestellt. Bei dieser Ausführungsform stellt das abbildende Flächenelement eine Projektionswand, die auch als Bildwand oder Projektionsfläche bezeichnet werden kann, dar.

Indem das Ausfahrelement eine Platte aus transparentem Material darstellt, die zumindest an einer Seite zumindest bereichsweise oberflächenbehandelt ist, kann zum einen eine gute Wiedergabe der digitalen Inhalte realisiert werden. Indem zusätzlich die hierfür erforderlichen optischen Eigenschaften durch eine Oberflächenbehandlung erzeugt sind, ist der Aufbau der Dunstabzugsvorrichtung vereinfacht. Insbesondere sind nicht mehrere Komponenten zum Erzeugen der Projektionswand erforderlich. Schließlich ist eine Platte mit Oberflächenbehandlung leicht handhabbar und kann insbesondere auf einfache Weise gereinigt werden, beispielsweise abgewischt werden.

Die Oberflächenbehandlung kann eine Beschichtung oder eine Mattierung darstellen. Als Beschichtung kann insbesondere eine Farbbeschichtung mit weißer Farbe verwendet werden. Die Mattierung kann durch Schleifen oder andere abtragende Verfahren, wie Sandstrahlen, erzeugt werden. Alternativ kann die Mattierung auch durch Aufbringen eines Behandlungsmaterials auf die Oberfläche erzielt werden, das das Material der Platte angreift und dadurch aufraut.

Erfindungsgemäß besteht das Ausfahrelement zumindest im Bereich des abbildenden Flächenelementes aus mehreren parallelen Platten aus transparentem Material und zwischen zwei Platten ist eine abbildende Schicht angeordnet. Die Platten können auch bei dieser Ausführungsform beispielsweise aus Kunststoff oder Glas bestehen. Die abbildende Schicht, die zwischen zwei Platten angeordnet ist, stellt vorzugsweise eine lichtbrechende Folie dar. Das Ausfahrelemente beziehungsweise das abbildende Flächenelement wird daher bei dieser Ausführungsform durch ein Verbundmaterial, das auch als Plattenverbund bezeichnet werden kann, gebildet. Handelt es sich bei dem transparenten Material der Platten um Glas kann das Ausfahrelement oder zumindest das abbildende Flächenelement daher auch als Doppelglasverbund bezeichnet werden.

Bei der Ausführungsform, bei der das Ausfahrelement aus einem Plattenverbund besteht, können die digitalen Inhalte von der Vorderseite und/oder von der Rückseite auf das Ausfahrelement projiziert werden. Diese Ausführungsform weist daher den Vorteil auf, dass das Ausfahrelement zu den beiden Seiten zur Abbildung unterschiedlicher digitaler Inhalte genutzt werden kann. Beispielsweise können auf der Vorderseite des Ausfahrelementes in dem Bereich des abbildenden Flächenelementes relevante Inhalte zu einem Kochvorgang wiedergegeben werden. Von der anderen Seite, die als Rückseite bezeichnet wird, können davon unabhängige digitale Inhalte wiedergegeben werden, wie beispielsweise Nachrichten, Netzinhalte oder Spielfilme. Diese Ausführungsform des Ausfahrelementes bietet sich insbesondere bei einer Dunstabzugsvorrichtung an, die in einer Küchenanordnung eingesetzt werden soll, die eine Kochinsel darstellt. Als Kochinsel wird hierbei eine Küchenanordnung bezeichnet, die beispielsweise einen Küchenunterschrank darstellen kann und an deren Rückseite sich keine Raumwand anschließt.

Gemäß einer alternativen erfindungsgemäßen Ausführungsform wird zumindest das abbildende Flächenelement des Ausfahrelementes durch einen Bildschirm gebildet. Besonders bevorzugt ist der Bildschirm ein LCD-Bildschirm. Solche Bildschirme können eine geringe Dicke aufweisen und nehmen daher von dem Platz der auf der Arbeitsplatte gegeben ist, nur wenig Raum in Anspruch. Auch dieses Ausfahrelement besteht vorzugsweise aus transparentem Material. Hierdurch kann das optische Erscheinungsbild des Auszugselementes weiter verbessert werden. Zudem ist eine Wiedergabe auf einem Bildschirm, insbesondere einem LCD, von hoher Qualität möglich.

Bei der Ausführungsform, bei der das abbildende Flächenelement durch einen Bildschirm gebildet wird, weist das Auszugselement vorzugsweise zusätzlich eine transparente Scheibe auf, die den Bildschirm abdeckt. Die Scheibe kann auch als Platte bezeichnet werden. Die Scheibe kann zum Schutz des Bildschirmes vor Verunreinigungen dienen. Dies ist vorteilhaft, da die Scheibe gereinigt werden, beispielsweise abgewischt werden kann, ohne den Bildschirm zu beschädigen.

Gemäß einer bevorzugten Ausführungsform ist zumindest ein Teil des Ausfahrelementes lösbar an der Dunstabzugsvorrichtung befestigt. Bei der Ausführungsform, bei der das Ausfahrelement eine transparente Platte darstellt und das abbildende Flächenelement durch eine Oberflächenbehandlung gebildet ist, oder bei der Ausführungsform, bei der das Ausfahrelement durch einen Plattenverbund gebildet ist, kann beispielsweise jeweils das gesamte Ausfahrelement von der Dunstabzugsvorrichtung abgenommen werden.

Bei der Ausführungsform, bei der das abbildende Flächenelement durch einen Bildschirm gebildet wird und eine zusätzliche transparente Scheibe vorgesehen ist, ist vorzugsweise die Scheibe lösbar mit der Dunstabzugsvorrichtung verbunden. Insbesondere ist die Scheibe lösbar an dem Ausfahrelement befestigt. Dies bedeutet, dass die Scheibe von dem Ausfahrelement abgenommen werden kann. Die lösbare Befestigung ist vorteilhaft, da hierdurch eine Reinigung zumindest des Teils des Ausfahrelementes ermöglicht wird, das das abbildende Flächenelement abdeckt. Eine Beschädigung des Bildschirmes kann dabei verhindert werden.

Die Bilder, die aus den digitalen Inhalten erzeugt werden müssen, um diese an dem abbildenden Flächenelement ausgeben zu können, werden durch eine bilderzeugende Einheit erzeugt. Die bilderzeugende Einheit kann erfindungsgemäß ein Projektor sein oder eine Verarbeitungseinheit zur Umwandlung in Steuersignale für einen Bildschirm.

Ein Projektor kann zu der Dunstabzugsvorrichtung separat vorliegen. Beispielsweise kann ein mobiler Projektor verwendet werden, der auf die Arbeitsplatte gestellt wird. Alternativ kann der Projektor aber auch in einem anderen Gerät in der Küche integriert sein. Beispielsweise in einem Kochfeld oder einer Dunstabzugshaube, die oberhalb des Kochfeldes an der Raumwand oder Raumdecke befestig ist.

Es ist aber auch möglich die bilderzeugende Einheit in der Dunstabzugsvorrichtung zu integrieren. Diese Ausführungsform ist insbesondere vorteilhaft, bei einem Auszugselement, bei dem das abbildende Flächenelement durch einen Bildschirm gebildet wird. Als in der Dunstabzugsvorrichtung integriert, wird eine bilderzeugende Einheit bezeichnet, die entweder baulich in der Dunstabzugsvorrichtung, beispielsweise in oder an dem Gehäuse befestigt ist. Als integriert wird aber auch eine bilderzeugende Einheit verstanden, die mit der Dunstabzugsvorrichtung und insbesondere dem Bildschirm zur Übermittlung von Signalen verbunden ist. Diese Verbindung kann drahtgebunden oder drahtlos sein.

Besonders bevorzugt weist die bilderzeugende Einheit einen Anschluss zur Verbindung mit mindestens einem Netzwerk, beispielsweise einem hausinternen Netzwerk oder dem Internet auf. Auch dieser Anschluss kann für die drahtgebundene oder die drahtlose Übermittlung ausgestaltet sein.

Erfindungsgemäß weist die Dunstabzugsvorrichtung zumindest eine Absaugöffnung zum Absaugen von Luft nach unten auf. Zusätzlich zu dem Gehäuse, Ausfahrelement(en) und Bewegungsvorrichtung ist bei der Dunstabzugsvorrichtung, die eine Dunstabzugshaube darstellt, ein Gebläse vorgesehen. Die Dunstabzugsvorrichtung weist mindestens eine Absaugöffnung zum Absaugen von Luft nach unten auf. Insbesondere wird über die Dunstabzugsvorrichtung Luft von oberhalb der Arbeitsplatte nach unten abgesaugt und aus der Dunstabzugsvorrichtung abgeführt. Das Gebläse der Dunstabzugsvorrichtung ist daher unterhalb der Arbeitsplatte angeordnet. Als Absaugöffnung wird die Öffnung bezeichnet, über die Luft bei Betrieb der Dunstabzugsvorrichtung in die Dunstabzugsvorrichtung eintritt. Durch die Dunstabzugsvorrichtung kann die Funktion der Anzeige von digitalen Inhalten mit der Funktion des Abzugs von Wrasen, die beim Kochen entstehen, kombiniert werden.

Erfindungsgemäß liegt die Absaugöffnung in der Oberseite des Gehäuses der Dunstabzugsvorrichtung und ist zu der Durchlassöffnung des Gehäuses der Dunstabzugsvorrichtung für das Ausfahrelement benachbart. Zwischen der Absaugöffnung und der oder den Durchlassöffnungen kann ein Steg ausgebildet sein. Es liegt aber auch im Rahmen der Erfindung, dass die Absaugöffnung und die Durchlassöffnungen gemeinsam eine Öffnung in der Oberseite des Gehäuses bilden. Bei dieser Anordnung der Absaugöffnung der Dunstabzugsvorrichtung in der Oberseite des Gehäuses wird die Dunstabzugsvorrichtung auch als Muldenlüfter bezeichnet. Es kann ein Ausfahrelement vorgesehen sein, das einen der bereits beschriebenen Aufbauten aufweisen kann. Beispielsweise kann eine transparente Platte mit Oberflächenbehandlung, ein Plattenverbund mit Zwischenschicht oder ein Bildschirm als abbildendes Flächenelement vorgesehen sein.

Das Ausfahrelement ist vorzugsweise so in dem Gehäuse angeordnet, dass dieses an einer Längskante der Absaugöffnung anliegt und entlang dieser Längskante nach oben und unten verschoben werden kann. Vorzugsweise stellt diese Längskante die rückwärtige Kante der Absaugöffnung dar, das heißt die Durchlassöffnung liegt zu der Absaugöffnung nach hinten versetzt. Wird vor der Dunstabzugsvorrichtung ein Kochfeld betrieben, so kann der Wrasen an dem Ausfahrelement entlang strömen und in die Absaugöffnung eingesaugt werden. Es ist auch möglich zwei Ausfahrelemente vorzusehen. Hierbei liegen die entsprechenden Durchlassöffnungen vorzugsweise an den Längskanten der Absaugöffnung. Dadurch kann ein erstes Ausfahrelement an der Rückseite der der Absaugöffnung ausgefahren werden und ein zweites an der Vorderseite der Absaugöffnung aufgefahren werden. Vorzugsweise wird dabei das vordere Ausfahrelement auf eine geringere Höhe ausgefahren als das hintere Ausfahrelement. Hierdurch kann zum einen ein Spritzschutz durch das hintere Ausfahrelement geschaffen werden und zum anderen ein Absaugen aus einer Höhe, die über der Absaugöffnung in dem Gehäuse liegt, gewährleistet werden. An beiden Ausfahrelementen können abbildende Flächenelemente ausgebildet sein. Insbesondere bei einer Dunstabzugshaube, bei der die Absaugöffnung zwischen Kochzonen mittig zwischen der Vorderseite und der Rückseite eines Kochfeldes angeordnet ist, können an beiden Ausfahrelementen an den jeweiligen abbildenden Flächenelementen digitale Inhalte, die beispielsweise Kochrezepte betreffen, wiedergegeben werden.

Bei der Dunstabzugsvorrichtung, kann das Ausfahrelement einen Abzugskorpus aufweisen, in dem die mindestens eine Absaugöffnung liegt und das abbildende Flächenelement ist an zumindest einem Teil der Seitenwand des Abzugskorpus angeordnet, in der die Ansaugöffnung eingebracht ist.

Diese Dunstabzugsvorrichtung kann auch als Down-Draft-Dunstabzug bezeichnet werden. In dem Abzugskorpus ist ein Absaugkanal gebildet, der von der Absaugöffnung zu der Unterseite des Abzugskorpus führt, wo eingesaugte Luft ausgelassen werden kann. Der Abzugskorpus kann hierzu beispielsweise hohl ausgestaltet sein. Der Abzugskorpus stellt das Ausfahrelement dar, das vertikal beweglich an dem Gehäuse gelagert ist. Die Absaugöffnung kann in einer Seitenwand des Abzugskorpus eine umlaufende Spaltform aufweisen. Über die Dunstabzugsvorrichtung erfolgt ein sogenannter Randabzug. Bei dieser Dunstabzugsvorrichtung kann das abbildende Flächenelement beispielsweise an der Fläche vorgesehen sein, die von der spaltförmigen Absaugöffnung umgeben ist. Es ist aber auch möglich, dass die Absaugöffnung beispielsweise nur einen oder mehrere Spalte entlang der Oberkante der Seitenwand des Abzugskorpus oder im unteren Bereich der Seitenwand des Abzugskorpus bildet. Auch bei dieser Dunstabzugsvorrichtung ist das abbildende Flächenelement vorzugsweise an der gleichen Seitenwand angeordnet, in der die Absaugöffnung(en) eingebracht sind. Das abbildende Flächenelement kann entsprechend den oben beschriebenen Ausführungsformen beispielsweise durch eine transparente Platte mit Oberflächenbehandlung, einen Plattenverbund mit Zwischenschicht oder einen Bildschirm als abbildendes Flächenelement gebildet sein.

Das abbildende Flächenelement ist bei einer Dunstabzugsvorrichtung, bei der dieses an einem Abzugskorpus vorgesehen ist, vorzugsweise lösbar mit dem Abzugskorpus verbunden. Hierdurch kann das Flächenelement beispielsweise zu Reinigungszwecken abgenommen werden.

Die Dunstabzugsvorrichtung ist vorzugsweise hinter einem Kochfeld angeordnet. Es liegt aber insbesondere bei der Ausführungsform der Dunstabzugsvorrichtung als Muldenlüfter auch im Rahmen der Erfindung, dass diese in der Fläche eines Kochfeldes liegt. Beispielsweise kann die Dunstabzugsvorrichtung mittig zwischen vorderen und hinteren Kochzonen angeordnet sein. Dies ist insbesondere für eine Kochinsel vorteilhaft.

Die Dunstabzugsvorrichtung weist vorzugsweise zumindest eine Bewegungsvorrichtung zum vertikalen Verschieben des Ausfahrelementes gegenüber dem Gehäuse auf. Die Bewegungsvorrichtung ist vorzugsweise unterhalb der Arbeitsplatte angeordnet.

Gemäß einer Ausführungsform kann das Gehäuse einen Deckel zum Abdecken der Durchlassöffnung für das Ausfahrelement aufweisen, der beweglich an dem Gehäuse gehalten ist. Bei der Ausführungsform der Dunstabzugsvorrichtung bei der auch die Absaugöffnung der Dunstabzugsvorrichtung in dem Gehäuse liegt, dient der Deckel vorzugsweise auch zur Abdeckung der Absaugöffnung. Der Deckel kann über ein Scharnier an dem Gehäuse befestigt sein. Befindet sich das Ausfahrelement in der Ruhestellung, so befindet sich der Deckel in einer solchen Position, dass dieser die Durchlassöffnung abdeckt. Somit wird das Ausfahrelement und insbesondere das abbildende Flächenelement vor Verunreinigungen geschützt. Wird das Ausfahrelement aus der Ruhestellung in die Betriebsstellung ausgefahren, so kann der Deckel durch das Ausfahrelement aufgeklappt werden und gibt damit die Durchlassöffnung und gegebenenfalls die Absaugöffnung frei.

Gemäß einem weiteren Aspekt betrifft die Erfindung eine Küchenanordnung, die zumindest eine Arbeitsplatte umfasst. Die Küchenanordnung ist dadurch gekennzeichnet, dass diese zumindest eine erfindungsgemäße Dunstabzugsvorrichtung aufweist.

Die Dunstabzugsvorrichtung ist so angeordnet, dass diese in die Arbeitsplatte eingebracht ist. Insbesondere ist das Gehäuse der Dunstabzugsvorrichtung in eine Aussparung der Arbeitsplatte eingebracht. Die Durchlassöffnung in dem Gehäuse liegt in der Aussparung.

Vorteile und Merkmale, die bezüglich der Dunstabzugsvorrichtung beschrieben werden, gelten - soweit anwendbar - entsprechend für die Küchenanordnung und umgekehrt.

Gemäß einer bevorzugten Ausführungsform umfasst die Küchenordnung ein Kochfeld. Die Dunstabzugsvorrichtung ist bei dieser Ausführungsform vorzugsweise hinter dem Kochfeld angeordnet. Die Durchlassöffnung erstreckt sich in dem Gehäuse vorzugsweise in der Breitenrichtung des Kochfeldes.

Gemäß einer Ausführungsform umfasst die Küchenanordnung ein Kochfeld und eine bilderzeugende Einheit, die einen Projektor darstellt, wobei die bilderzeugende Einheit in dem Kochfeld integriert ist.

Die Erfindung wird im Folgenden erneut unter Bezugnahme auf die beiliegenden Zeichnungen beschrieben. Es zeigen:
Figur 1: eine schematische Perspektivansicht einer Anzeigevorrichtung in einer Betriebsstellung;
Figur 2: eine schematische Schnittdarstellung der ersten Anzeigevorrichtung nach Figur 1 in einer Ruhestellung;
Figur 3: eine schematische Schnittdarstellung der Anzeigevorrichtung nach Figur 1 in einer Betriebsstellung;
Figur 4: eine schematische Perspektivansicht einer ersten Ausführungsform einer Dunstabzugsvorrichtung in einer Betriebsstellung;
Figur 5: eine schematische Perspektivansicht einer zweiten Ausführungsform einer Dunstabzugsvorrichtung in einer Betriebsstellung;
Figur 6: eine schematische Perspektivansicht einer dritten Ausführungsform der erfindungsgemäßen Dunstabzugsvorrichtung in einer Betriebsstellung;
Figur 7: eine schematische Perspektivansicht einer vierten Ausführungsform der erfindungsgemäßen Dunstabzugsvorrichtung in einer Betriebsstellung; und
Figur 8: eine schematische Schnittdarstellung der vierten Ausführungsform der Dunstabzugsvorrichtung in der Betriebsstellung nach Figur 7.

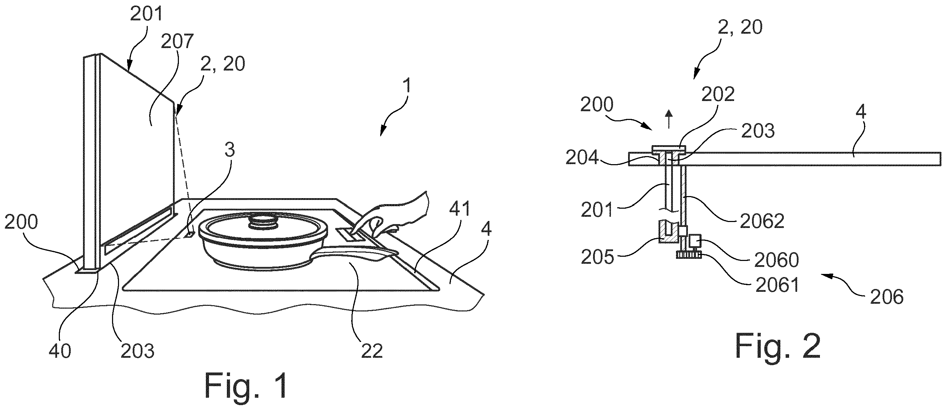

In Figur 1 ist eine schematische Perspektivansicht einer Anzeigevorrichtung 20 in einer Betriebsstellung gezeigt. Die Anzeigevorrichtung 20 stellt Teil einer Küchenanordnung 1 dar. Die Küchenanordnung 1 umfasst in der Figur 1 die Anzeigevorrichtung 20, eine Arbeitsplatte 4 sowie ein Kochfeld 22. Das Kochfeld 22 ist in einer Öffnung 41 der Arbeitsplatte 4 eingebracht. Weiterhin ist in der Arbeitsplatte 4 hinter dem Kochfeld 22 in einem Abstand zu der Rückseite des Kochfeldes 22 eine Aussparung 40 eingebracht. Die Aussparung 40 weist eine längliche Form auf. Die Längserstreckung der Aussparung 40 liegt parallel zur Rückseite des Kochfeldes 22.

Die Anzeigevorrichtung 20 umfasst ein Gehäuse 200 und ein Ausfahrelement 201. Das Ausfahrelement 201 ist in der gezeigten Betriebsstellung gegenüber dem Gehäuse 200 nach oben ausgefahren. Das Ausfahrelement 201 weist eine Plattenform auf. In dem Bereich, in dem das Ausfahrelement 201 über das Gehäuse 200 nach oben herausragt, ist an dem Ausfahrelement 201 ein abbildendes Flächenelement 207 ausgebildet. Das abbildende Flächenelement 207 kann beispielsweise durch eine Oberflächenbehandlung einer das Ausfahrelement 201 bildenden Platte, beispielsweise Kunststoff oder Glasplatte gebildet sein. Alternativ kann bei einem Ausfahrelement 201, das aus mehreren parallelen Platten besteht, in dem Bereich des abbildenden Flächenelementes 207 eine Zwischenschicht (nicht gezeigt), beispielsweise eine transparente aber lichtbrechende Folie angeordnet sein. Weiter alternativ kann an dem Ausfahrelement 201 als abbildendes Flächenelement 207 ein Bildschirm (nicht gezeigt) angeordnet sein.

In dem Kochfeld 22 ist ein Projektor 3 integriert, der Bilder in Richtung des Ausfahrelementes 201 und insbesondere in Richtung des abbildenden Flächenelementes ausgibt. Alternativ kann auch ein zu dem Kochfeld 22 separater Projektor (nicht gezeigt) verwendet werden.

In Figur 2 ist eine schematische Schnittansicht der Anzeigevorrichtung 20 nach Figur 1 gezeigt. Aus dieser Schnittansicht ergibt sich, dass das Gehäuse 200 der Anzeigevorrichtung 20 zweiteilig aufgebaut ist. Insbesondere besteht das Gehäuse 200 aus einem feststehenden Gehäuseteil 204 und einem verschiebbaren Gehäuseteil 205. Das feststehende Gehäuseteil 204 ist in die Aussparung 40 der Arbeitsplatte 4 eingebracht. Das Gehäuseteil 204 weist eine Durchlassöffnung 203 in Form eines Durchgangsschlitzes auf. Die Durchlassöffnung 203 liegt in der Oberseite des Gehäuses 200 der Anzeigevorrichtung 20. Zudem ist an dem Gehäuse 200 ein Deckel 202 vorgesehen, der verschwenkbar mit dem Gehäuse 200, insbesondere dem oberen Gehäuseteil 204, verbunden ist. In der in Figur 2 gezeigten Ruhestellung deckt der Deckel 202 die Durchlassöffnung 203 des Gehäuses 200 nach oben ab. Das untere Gehäuseteil 205 weist eine Wannenform oder Rinnenform auf. Der untere Rand des Ausfahrelementes 201 ist in dem unteren Gehäuseteil 205 gehalten. Das untere Gehäuseteil 205 ist mit einer Bewegungsvorrichtung 26 verbunden. Insbesondere ist das unter Gehäuseteil 205 mit einer Spindel 2062 verbunden. Die Spindel 2062 erstreckt sich in der dargestellten Ausführungsform in vertikaler Richtung. Die Spindel 2062 wird durch einen Motor 2060 über ein Getriebe 2061 angetrieben. In der in Figur 2 gezeigten Ruhestellung liegt das Ausfahrelement 201 in der Durchlassöffnung 203 und erstreckt sich von dieser nach unten. Es liegt auch im Rahmen der Erfindung, dass das Ausfahrelement 201 in der Ruhestellung soweit nach unten verschoben ist, dass dieses vollständig unterhalb der Arbeitsplatte 4 liegt.

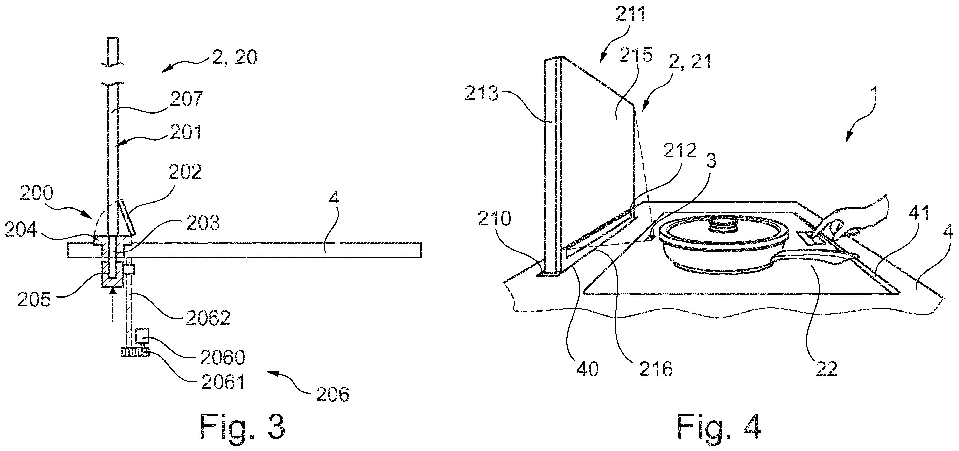

Soll die Anzeigevorrichtung 20 in Betrieb genommen werden, so wird das untere Gehäuseteil 204 über den Motor, das Getriebe und die Spindel nach oben verschoben. Hierdurch wird auch das Ausfahrelement 201 nach oben verschoben. Der Deckel 202 klappt hierbei auf. Das Ausfahrelement 201 wird durch die Durchlassöffnung 202 bei dem Verschieben geführt. Das Ausfahrelement 201 wird soweit aus nach oben verfahren, bis zumindest ein Teil des abbildenden Flächenelementes 207 oberhalb des Gehäuses 200 liegt. Diese Betriebsstellung ist in der Figur 3 schematisch gezeigt. In dieser Betriebsstellung können digitale Inhalte an dem abbildenden Flächenelement 207 wiedergegeben werden.

In Figur 4 ist eine erste Ausführungsform einer Küchenanordnung 1 mit Dunstabzugsvorrichtung 21 als Küchenvorrichtung 2 gezeigt. Insbesondere stellt die Dunstabzugsvorrichtung 21 einen sogenannten Downdraft-Dunstabzug dar. Bei dieser Ausführungsform umfasst die Küchenvorrichtung 2 beziehungsweise die Dunstabzugsvorrichtung 21 ein Ausfahrelement 211, das einen Abzugskorpus 213 aufweist. Der Abzugskorpus 213 weist eine Kastenform auf, die eine breite Vorderseite und eine breite Rückseite aufweist und die Abmessung in Tiefenrichtung geringer ist als in Breitenrichtung. In der Vorderseite des Abzugskorpus 213 ist eine Absaugöffnung 212 gebildet. Die Absaugöffnung 212 erstreckt sich bei dieser Ausführungsform entlang des unteren Randes der Vorderseite des Abzugskorpus 213 in horizontaler Richtung und stellt einen Spalt dar. Oberhalb der Absaugöffnung 212 ist das abbildende Flächenelement 215 angeordnet. Das abbildende Flächenelement 215 deckt in der darstellten Ausführungsform den gesamten Bereich oberhalb der Absaugöffnung 212 ab. Das abbildende Flächenelement 215 kann eine Platte mit Oberflächenbehandlung, einen Plattenverbund oder einen Bildschirm gegebenenfalls mit vorgelagerter Scheibe darstellen.

Wie sich aus Figur 4 ergibt, ist in der gezeigten Betriebsstellung das Ausfahrelement 211, das heißt der Abzugskorpus 213 mit dem abbildenden Flächenelement 215 soweit über die Durchlassöffnung 216 in dem Gehäuse 210 ausgefahren, dass die Absaugöffnung 212 oberhalb des Gehäuses 210 liegt. In der Betriebsstellung können von einem Projektor 3 digitale Inhalte auf das abbildende Flächenelement 215 projiziert werden. In der gezeigten Ausführungsform ist der Projektor 3 im hinteren Bereich des Kochfeldes 22 integriert.

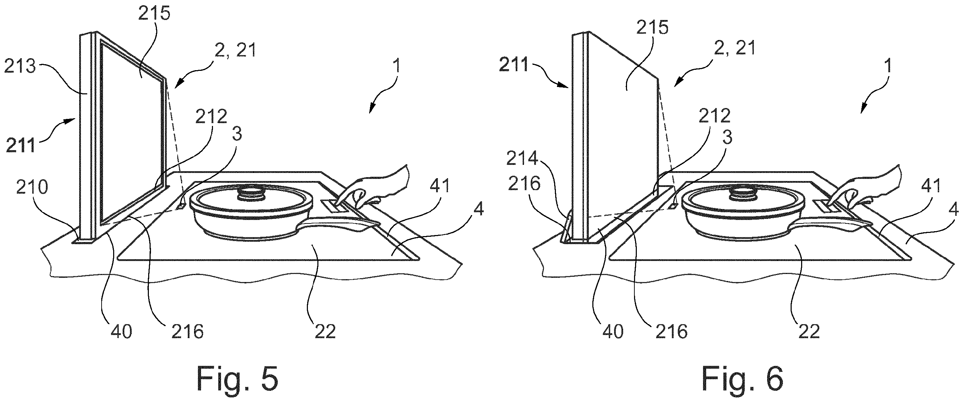

In Figur 5 ist eine zweite Ausführungsform einer Dunstabzugsvorrichtung 21 gezeigt. Diese Ausführungsform unterscheidet sich von der ersten Ausführungsform aus Figur 4 dadurch, dass die Absaugöffnung 212 keinen geraden Spalt sondern einen entlang der vier Kanten der Vorderseite des Abzugskorpus 213 umlaufenden Spalt darstellt. Diese Art der Dunstabzugsvorrichtung 21 wird auch als Randabsaugung bezeichnet. Das abbildende Flächenelement 215 ist mittig innerhalb des umlaufenden Absaugspaltes 212 angeordnet. Das abbildende Flächenelement 215 ist vorzugsweise lösbar an dem Ausfahrelement 211, insbesondere mit dem Abzugskorpus 213, befestigt.

In Figur 6 ist eine dritte Ausführungsform der Dunstabzugsvorrichtung 21 gezeigt. Im Unterschied zu der ersten und zweiten Ausführungsform ist bei dieser Ausführungsform die Dunstabzugsvorrichtung 21 eine sogenannte Muldenlüftung. Bei dieser Ausführungsform liegt die Absaugöffnung 212 in dem Gehäuse 210 der Küchenvorrichtung 2 in der Oberseite. Die Ausführungsform weist weiterhin einen Deckel 214 auf, der in der Ruhestellung die Absaugöffnung 212 nach oben abdeckt. In dem Gehäuse 210 ist in dieser Ausführungsform zusätzlich zu der Absaugöffnung 210 in der Oberseite auch die Durchlassöffnung 216 des Gehäuses 210 gebildet, durch die das Ausfahrelement 211 nach oben ausgefahren werden kann. Die Durchlassöffnung 216 ist in der dargestellten Ausführungsform hinter der Absaugöffnung 212 angeordnet und bildet mit der Absaugöffnung 212 eine gemeinsame Öffnung in der Oberseite des Gehäuses 210. Auch die Durchlassöffnung 216 wird in der Ruhestellung von dem Deckel abgedeckt.

Das Ausfahrelement 211 bildet in der dritten gezeigten Ausführungsform ein Ausfahrelement 211, das eine Plattenform aufweist. Insbesondere wird das Ausfahrelement 211 durch eine Platte gebildet. Zumindest ein Teil der Platte stellt hierbei das abbildende Flächenelement 215 dar. Insbesondere ist bei dieser Ausführungsform das abbildende Flächenelement 215 durch einen Teil beziehungsweise Bereich der das Ausfahrelement 211 bildenden Platte gebildet. Vorzugsweise bildet der gesamte Bereich des Ausfahrelementes 211, das in der Betriebsstellung über die Durchlassöffnung 216 des Gehäuses 210 nach oben steht, das abbildende Flächenelement 215. Dadurch ist die Größe des abbildenden Flächenelementes 215, auf der digitale Inhalte wiedergegeben werden können, maximiert.

Auch bei der dritten Ausführungsform ist der Projektor 3 in dem hinteren Bereich des Kochfeldes 22 integriert.

Da die Durchlassöffnung 216 nur einen Teil der in dem Gehäuse 210 vorgesehenen Öffnung darstellt, kann über den restlichen Teil der Öffnung, der die Absaugöffnung 212 darstellt, Luft in das Gehäuse 210 eingesogen werden. Das Ausfahrelement 211 dient hierbei sowohl als Luftleitelement als auch als Spritzschutz und als Anzeigeelement. Vorzugsweise ist das Ausfahrelement 211 in dem Gehäuse 210 lösbar gehalten, das heißt kann aus dem Gehäuse 210 und einer darin vorgesehenen Bewegungsvorrichtung (nicht gezeigt) entnommen werden.

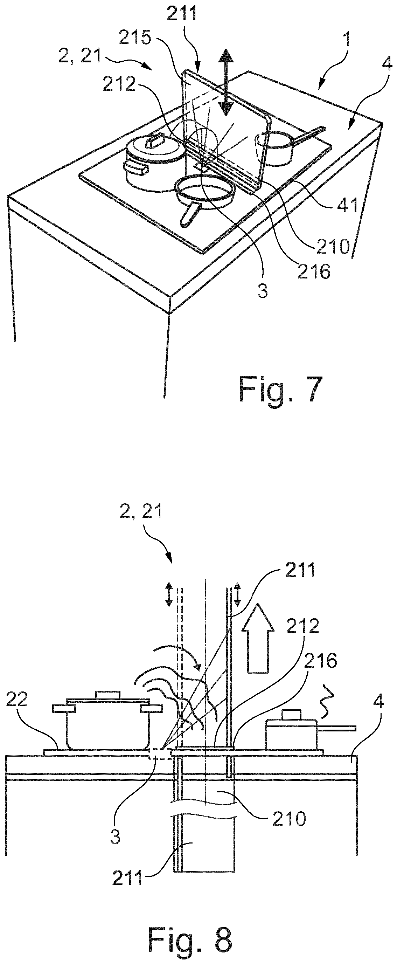

In den Figuren 7 und 8 ist eine vierte Ausführungsform einer Dunstabzugsvorrichtung 21 gezeigt. Allerdings ist die Dunstabzugsvorrichtung 21 nicht unmittelbar in der Arbeitsplatte 4 sondern mittelbar über das Kochfeld 22 in der Arbeitsplatte 4 angeordnet. Insbesondere ist das Gehäuse 210 der Dunstabzugsvorrichtung 21 in dem Kochfeld 22 und insbesondere in der Mitte des Kochfeldes 22 zwischen zwei Reihen von Kochzonen angeordnet. Bei dieser Ausführungsform handelt es sich um eine sogenannte Kochinsel. Die Kochzonen können von unterschiedlichen Seiten des Kochfeldes 22 aus bedient werden. Zudem unterscheidet sich die vierte Ausführungsform von der dritten Ausführungsform dadurch, dass die Küchenvorrichtung 2 zwei Ausfahrelemente 211 aufweist. Diese sind an gegenüberliegenden Längsseiten der Öffnung in der Oberseite des Gehäuses 210 angeordnet. Zwischen den Teilen der Öffnung, die die Durchlassöffnungen für die beiden Ausfahrelemente bilden, ist die Absaugöffnung 212 der Dunstabzugsvorrichtung 21 gebildet. In der Betriebsposition ist zumindest eines der Ausfahrelemente 211 aus der Öffnung ausgefahren. In der Betriebsstellung kann eines der Ausfahrelemente 211 um einen größeren Betrag aus der Durchlassöffnung 216 ausgefahren werden, als das weitere Ausfahrelement 211. In der dargestellten Ausführungsform ist in dem Kochfeld 22 ein Projektor 3 integriert, der von der Vorderseite aus auf die Ausfahrelement 211 gerichtet ist. Ist das vordere Ausfahrelement 211 nicht ausgefahren, kann der Projektor 3 beispielsweise auf das hintere Ausfahrelement 211 von der Vorderseite projizieren. Die Rückseite des hinteren Ausfahrelementes 211 ist dem Benutzer zugewandt der von der Rückseite aus das Kochfeld 22 bedient. An dem an dem Ausfahrelement 211 gebildeten abbildenden Flächenelement 215 kann der Benutzer von der Rückseite aus auf dem hinteren Ausfahrelement die digitalen Inhalte erkennen.

Wie sich aus Figur 8 ergibt, können aber beispielsweise auch beide Ausfahrelemente 211 aus der Öffnung des Gehäuses 210 ausgefahren werden. Hierbei kann sowohl auf das vordere als auch auf das hintere Ausfahrelement 211 projiziert werden.

Mit der vorliegenden Erfindung kann eine Reihe von Vorteilen erzielt werden. Insbesondere kann ein neuartiges modernes Erscheinungsbild geschaffen werden. Zudem wird eine einfache Reinigbarkeit gewährleistet. Die vorliegende Erfindung bietet vielfältige Anwendungsmöglichkeiten. Beispielsweise kann die Küchenvorrichtung zur Anzeige von relevanten Inhalten zum Kochvorgang, zur Wiedergabe von Netzinhalten, Spielfilmen oder anderen Medieninhalten genutzt werden. Zudem bestehen bei der vorliegenden Erfindung vielfältige Installationsmöglichkeiten. Insbesondere kann die Dunstabzugsvorrichtung in eine Kochanordnung integriert werden, die eine Inselanordnung darstellt oder in eine Kochanordnung, die an einer Raumwand angrenzt. Zudem ist die Dunstabzugsvorrichtung gemäß der vorliegenden Erfindung verschleißarm.

### Bezugszeichen

- 1: Küchenanordnung
- 2: Küchenvorrichtung

- 20: Anzeigevorrichtung
- 200: Gehäuse
- 201: Ausfahrelement
- 202: Deckel
- 203: Durchlassöffnung
- 204: feststehendes Gehäuseteil
- 205: bewegliches Gehäuseteil
- 206: Bewegungsvorrichtung
- 2060: Motor
- 2061: Getriebe
- 2062: Spindel
- 207: abbildendes Flächenelement

- 21: Dunstabzugsvorrichtung
- 210: Gehäuse
- 211: Ausfahrelement
- 212: Absaugöffnung
- 213: Abzugskorpus
- 214: Klappe
- 215: abbildendes Flächenelement
- 216: Durchlassöffnung

- 22: Kochfeld
- 220: Gehäuse

- 3: Projektor

- 4: Arbeitsplatte
- 40: Aussparung
- 41: Öffnung

## Patentansprüche

1. Dunstabzugsvorrichtung (21) mit einem Gehäuse (210) und mindestens einem Ausfahrelement (211), wobei das Gehäuse (210) in dessen Oberseite mindestens eine Durchlassöffnung (216) zum Auslass zumindest eines Teils des Ausfahrelementes (211) aus dem Gehäuse (210) aufweist, das mindestens eine Ausfahrelement (211) an dem Gehäuse (210) zwischen einer Ruhestellung und einer Betriebsstellung vertikal verschiebbar gelagert ist, das Ausfahrelement (211) in der Ruhestellung in oder unterhalb der Durchlassöffnung (216) liegt und in der Betriebsstellung zumindest bereichsweise oberhalb der Durchlassöffnung (216) liegt und das Ausfahrelement (211) zumindest bereichsweise ein abbildendes Flächenelement (215) für digitale Inhalte aufweist **dadurch gekennzeichnet, dass** die Dunstabzugsvorrichtung (21) zumindest eine Absaugöffnung (212) zum Absaugen von Luft nach unten aufweist, die Absaugöffnung (212) in der Oberseite des Gehäuses (210) der Dunstabzugsvorrichtung (21) liegt und zu der Durchlassöffnung (216) des Gehäuses (210) der Dunstabzugsvorrichtung (21) für das Ausfahrelement (211) benachbart ist und das abbildende Flächenelement (215) entweder eine Projektionswand ist, die eine Platte aus transparentem Material darstellt, die an zumindest einer Oberfläche oberflächenbehandelt ist, aus mehreren parallelen Platten aus transparentem Material besteht und zwischen zwei Platten eine abbildende Schicht angeordnet ist oder einen Bildschirm darstellt.

2. Dunstabzugsvorrichtung nach Anspruch 1, **dadurch gekennzeichnet, dass** die Oberflächenbehandlung eine Beschichtung oder eine Mattierung darstellt.

3. Dunstabzugsvorrichtung nach Anspruch 1, **dadurch gekennzeichnet, dass** zumindest das abbildende Flächenelement (211) des Ausfahrelementes (211) einen LCD-Bildschirm darstellt.

4. Dunstabzugsvorrichtung nach Anspruch 3, **dadurch gekennzeichnet, dass** das Ausfahrelement (211) zusätzlich zu dem Bildschirm eine transparente Scheibe aufweist, die den Bildschirm abdeckt.

5. Dunstabzugsvorrichtung nach einem der Ansprüche 1 bis 4, **dadurch gekennzeichnet, dass** zumindest ein Teil des Ausfahrelementes (211) lösbar an der Dunstabzugsvorrichtung (21) befestigt ist.

6. Dunstabzugsvorrichtung nach einem der Ansprüche 1 bis 4, **dadurch gekennzeichnet, dass** die Dunstabzugsvorrichtung (21) eine bilderzeugende Einheit (3) umfasst, die in der Dunstabzugsvorrichtung (21) integriert ist.

7. Küchenanordnung (1) die zumindest eine Arbeitsplatte (4) umfasst, **dadurch gekennzeichnet, dass** die Küchenanordnung (1) zumindest eine Dunstabzugsvorrichtung (21) nach einem der Ansprüche 1 bis 6 aufweist.

8. Küchenanordnung nach Anspruch 7, **dadurch gekennzeichnet, dass** die Küchenanordnung (1) ein Kochfeld (22) umfasst und die Dunstabzugsvorrichtung (21) hinter dem Kochfeld (22) angeordnet ist.

9. Küchenanordnung nach Anspruch 8, **dadurch gekennzeichnet, dass** die Küchenanordnung (1) eine bilderzeugende Einheit umfasst, die einen Projektor (3) darstellt, und die bilderzeugende Einheit in dem Kochfeld (22) integriert ist.

## Claims

1. Extractor hood device (21) with a housing (210) and at least one extendable element (211), wherein the housing (210) has at least one through-flow opening (216) in the top side thereof for the passage of at least a part of the extendable element (211) out of the housing (210), the at least one extendable element (211) is positioned on the housing (210) so that it can move vertically between a rest position and an operating position, the extendable element (211) lies in or beneath the through-flow opening (216) in the rest position and lies at least in regions above the through-flow opening (216) in the operating position and the extendable element (211), at least in regions, has an imaging area element (215) for digital content, **characterised in that** the extractor hood device (21) has at least one extraction opening (212) for extracting air downward, the extraction opening (212) lies in the top side of the housing (210) of the extractor hood device (21) and is adjacent to the through-flow opening (216) of the housing (210) of the extractor hood device (21) for the extendable element (211) and the imaging area element (215) is either a projection wall, which represents a plate of transparent material which is surface-treated on at least one surface, consists of several parallel plates of transparent material and an imaging layer is arranged between two plates; or represents a screen.

2. Extractor hood device according to claim 1, **characterised in that** the surface treatment represents a coating or a matting.

3. Extractor hood device according to claim 1, **characterised in that** at least the imaging area element (211) of the extendable element (211) represents an LCD screen.

4. Extractor hood device according to claim 3, **characterised in that**, in addition to the screen, the extendable element (211) has a transparent pane which covers the screen.

5. Extractor hood device according to one of claims 1 to 4, **characterised in that** at least a part of the extendable element (211) is fastened to the extractor hood device (21) in a detachable manner.

6. Extractor hood device according to one of claims 1 to 4, **characterised in that** the extractor hood device (21) comprises an image-generating unit (3) which is integrated in the extractor hood device (21).

7. Kitchen arrangement (1) which comprises at least one worktop (4), **characterised in that** the kitchen arrangement (1) has at least one extractor hood device (21) according to one of claims 1 to 6.

8. Kitchen arrangement according to claim 7, **characterised in that** the kitchen arrangement (1) comprises a hob (22) and the extractor hood device (21) is arranged behind the hob (22).

9. Kitchen arrangement according to claim 8, **characterised in that** the kitchen arrangement (1) comprises an image-generating unit which represents a projector (3) and the image-generating unit is integrated in the hob (22).

## Revendications

1. Dispositif d'aspiration de vapeur (21) avec une carcasse (210) et au moins un élément escamotable (211), dans lequel le carter (210) présente, dans sa partie supérieure, au moins un orifice de passage (216) pour la sortie d'au moins une partie de l'élément escamotable (211) en dehors de la carcasse (210), l'au moins un élément escamotable (211) est logé de façon déplaçable à la verticale sur la carcasse (210) entre une position de repos et une position de fonctionnement, l'élément escamotable (211) se trouve, en position de repos, dans ou sous l'orifice de passage (216) et, en position de fonctionnement, au moins par sections au-dessus de l'orifice de passage (216) et l'élément escamotable (211) présente au moins par sections un élément de surface (215) pour la reproduction de contenus numériques, **caractérisé en ce que** le dispositif d'aspiration de vapeur (21) présente au moins un orifice d'aspiration (212) pour aspirer l'air vers le bas, l'orifice d'aspiration (212) se situe dans le côté supérieur de la carcasse (210) du dispositif d'aspiration de vapeur (21) et dans le voisinage de l'orifice de passage (216) de la carcasse (210) du dispositif d'aspiration de vapeur (21) pour l'élément escamotable (211) et l'élément de surface (215) pour la reproduction de contenus est soit une paroi de projection qui constitue une plaque en un matériau transparent, traité en surface sur au moins une surface, composé de plusieurs plaques parallèles en matériau transparent et une couche de reproduction de contenus est disposée entre deux plaques, soit un écran.

2. Dispositif d'aspiration de vapeur selon la revendication 1, **caractérisé en ce que** le traitement de surface constitue un revêtement ou un matage.

3. Dispositif d'aspiration de vapeur selon la revendication 1, **caractérisé en ce qu'**au moins l'élément de surface (211) pour la reproduction de contenus de l'élément escamotable (211) constitue un écran LCD.

4. Dispositif d'aspiration de vapeur selon la revendication 3, **caractérisé en ce que** l'élément escamotable (211) présente outre l'écran une vitre transparente, qui couvre l'écran.

5. Dispositif d'aspiration de vapeur selon l'une des revendications 1 à 4, **caractérisé en ce qu'**au moins une partie de l'élément escamotable (211) est fixée de façon amovible au dispositif d'aspiration de vapeur (21).

6. Dispositif d'aspiration de vapeur selon l'une des revendications 1 à 4, **caractérisé en ce que** le dispositif d'aspiration de vapeur (21) comprend une unité génératrice d'images (3) intégrée au dispositif d'aspiration de vapeur (21).

7. Agencement de cuisine (1) comprenant au moins un plan de travail (4), **caractérisé en ce que** l'agencement de cuisine (1) présente au moins un dispositif d'aspiration de vapeur (21) selon l'une des revendications 1 à 6.

8. Agencement de cuisine selon la revendication 7, **caractérisé en ce que** l'agencement de cuisine (1) comprend un champ de cuisson (22) et le dispositif d'aspiration de vapeur (21) est disposé derrière le champ de cuisson (22).

9. Agencement de cuisine selon la revendication 8, **caractérisé en ce que** l'agencement de cuisine (1) comprend une unité génératrice d'images qui constitue un projecteur (3) et l'unité génératrice d'images est intégrée au champ de cuisson (22).
